**Europäisches Patentamt**

(19) **European Patent Office**

**Office européen des brevets**

(11) Numéro de publication: **0 242 249**
**B1**

(12) **FASCICULE DE BREVET EUROPEEN**

(45) Date de publication du fascicule du brevet:
**23.08.89**

(21) Numéro de dépôt: **87400559.8**

(22) Date de dépôt: **13.03.87**

(51) Int. Cl.⁴: **F23M 9/06, F23L 15/04**

(54) Brûleur à faible émission de gaz polluants.

(30) Priorité: **14.03.86 FR 8603697**

(43) Date de publication de la demande:
**21.10.87 Bulletin 87/43**

(45) Mention de la délivrance du brevet:
**23.08.89 Bulletin 89/34**

(84) Etats contractants désignés:
**AT BE CH DE ES GB GR IT LI LU NL SE**

(56) Documents cités:
**EP-A- 0 021 035**
**EP-A- 0 071 073**
**WO-A-86/01876**
**AU-B- 537 964**
**DE-A- 2 250 766**
**FR-A- 1 099 337**
**US-A- 4 120 640**
**US-A- 4 224 019**

(73) Titulaire: **CENTRE NATIONAL DE LA RECHERCHE SCIENTIFIQUE (CNRS), 15, Quai Anatole France, F-75007 Paris(FR)**

(72) Inventeur: **Bellet, Jean-Claude, 8, rue des Tamaris, F-86000 Poitiers(FR)**
Inventeur: **Saucereau, Didier, 14, rue de la Vincenderie, F-86180 Bruxerolles(FR)**
Inventeur: **Denis, Jean Joseph, "Les Jaudouines" Quinçay, F-86190 Vouille(FR)**
Inventeur: **Falaise, Daniel, 21 rue de Mariéville, F-86000 Poitiers(FR)**

(74) Mandataire: **Levesque, Denys et al, Cabinet Beau de Loménie 55, rue d'Amsterdam, F-75008 Paris(FR)**

## Description

L'invention se rapporte à un brûleur à faible émission de gaz polluants, comprenant, dans un conduit linéaire, un injecteur de fluide combustible qui crée dans le conduit, alimenté en air comburant, un mélange combustible/air qui brûle en donnant naissance à une flamme, laquelle s'accroche à un stabilisateur de flamme disposé dans le conduit en aval de l'injecteur.

Lorsque le fluide combustible contient du carbone (c'est le cas lorsqu'il s'agit d'un hydrocarbure), la combustion risque de produire, outre de l'anhydride carbonique, de l'oxyde de carbone. Afin d'obtenir une combustion complète sur une courte distance et de réduire le taux de ce dernier gaz polluant, il est connu (DE-A 2 250 766) d'utiliser, comme stabilisateur de flamme, une pièce obturant une partie centrale de la section droite du conduit, cette pièce étant destinée à créer une zone de recirculation. Pour réduire encore l'émission de gaz polluants dans un brûleur de ce genre, il est prévu, selon l'invention, de placer, en aval de ce stabilisateur, sur la face interne de la paroi du conduit, un obstacle causant une réduction locale suivie d'une augmentation brusque de la section du conduit, cet obstacle étant réalisé en matériau réfractaire isolant, comme la paroi du conduit.

La pièce constituant le stabilisateur peut par exemple avoir une conformation creuse avec une section droite en V, étant alors disposée de façon à aller en s'évasant dans le sens de l'écoulement du mélange gazeux.

Grâce à cette disposition, la flamme de combustion qui prend naissance et s'accroche au stabilisateur se propage obliquement vers la paroi du conduit, qui n'est atteinte qu'à une certaine distance en aval du stabilisateur. L'obstacle placé dans cette région du conduit assure un mélange des gaz frais se trouvant le long de la paroi du conduit avec les gaz brûlés situés à l'intérieur du sillage du stabilisateur, de sorte que le résidu de monoxyde de carbone CO de la zone périphérique non encore oxydé à l'état de dioxyde de carbone $CO_2$ est renvoyé vers l'axe du conduit où son oxydation peut s'effectuer.

De préférence, l'obstacle, considéré suivant la direction de l'axe longitudinal du conduit, est situé en regard de la portion de section droite du conduit laissée libre par le stabilisateur. Par ailleurs, il convient que l'obstacle couvre une fraction seulement de la portion de section droite du conduit, et il est avantageux qu'il soit conformé de façon à créer une diminution progressive de la section du conduit.

La forme du stabilisateur et celle de l'obstacle sont liées à la forme de la section transversale du conduit. Lorsque cette dernière est de forme rectangulaire, le stabilisateur est de préférence constitué par une gouttière s'étendant transversalement, parallèlement à l'une des paires de côtés opposés du contour du conduit, l'obstacle étant composé de deux demi-obstacles s'étendant parallèlement à ladite gouttière et disposés symétriquement par rapport à l'axe du conduit. En variante, lorsque la section du conduit a un contour de forme circulaire, le stabilisateur est de préférence constitué par une pièce conique de révolution disposée coaxialement au conduit, l'obstacle étant formé par une couronne également coaxiale au conduit.

Il convient en outre de prévoir dans le conduit, entre l'injecteur et le stabilisateur, une plaque perforée transversale couvrant toute la section du conduit. Cette plaque doit être telle qu'elle empêche la flamme de remonter jusqu'à l'injecteur. L'injection du combustible doit quant à elle être effectuée de façon à obtenir une distribution homogène, par exemple en disposant l'injecteur suffisamment loin en amont de la plaque.

D'autre part, on sait que les réactions de combustion dans l'air s'accompagnent généralement de la formation d'oxydes d'azote NOx. Il s'agit principalement de processus de "formation thermique" dépendant du niveau de température des gaz (de façon approximativement exponentielle) ainsi que du temps de séjour de ces gaz à température élevée.

La combustion d'un mélange fluide combustible/air voisin de la stoechiométrie conduit à la plus forte puissance calorifique, donc à des températures élevées et à un taux important de formation thermique de NOx. On peut obtenir une réduction de ce taux en brûlant un mélange à faible richesse, ce qui conduit à des températures moins élevées et permet d'éviter aux gaz de passer par des niveaux de température où la formation de NOx est rapide. Cependant, dans le cas d'un hydrocarbure, il faut maintenir une température suffisante pour permettre l'oxydation complète du CO en CO2. On s'efforce donc de maintenir la température des gaz entre 1 000°C et 1 500°C.

Un préchauffage de l'air comburant permet de descendre suffisamment bas en richesse, par exemple au voisinage de 0,30-0,35, la valeur correspondant au mélange stoechiométrique étant prise pour unité, tout en conservant une flamme stable. A cet effet, un échangeur de chaleur peut être disposé à la sortie du conduit afin d'assurer l'échauffement préalable de l'air comburant introduit à l'entrée du conduit pour former le mélange combustible/air. Cet échangeur de chaleur est de préférence situé à une distance suffisante de l'obstacle précité pour permettre la combustion complète dans l'intervalle correspondant de l'oxyde de carbone que contiennent les gaz issus de la flamme avant que ceux-ci subissent un refroidissement à leur passage dans l'échangeur de chaleur.

Avantageusement, un brûleur selon l'invention est pourvu d'un dispositif de régulation déterminant le débit du fluide combustible injecté en fonction de la température désirée dans le conduit en aval de la flamme. Un tel dispositif a notamment pour rôle de permettre le pilotage de la combustion au cours de la phase initiale d'allumage et de montée en régime du brûleur.

D'autres caractéristiques et avantages de l'invention ressortiront plus clairement de la description qui va suivre, en regard des dessins annexés, d'exemples de réalisation non limitatifs.

La figure 1 représente schématiquement, en coupe longitudinale, un brûleur selon l'invention.

Les figures 2 et 3 représentent des coupes transversales du brûleur de la figure 1 suivant les lignes confondues II-II et III-III, respectivement dans deux variantes de réalisation, savoir avec un conduit de section rectangulaire et avec un conduit de section circulaire.

La figure 4 représente un brûleur avec réchauffage de l'air comburant.

La figure 5 représente un brûleur à veine d'air réalisé à l'aide du dispositif de la figure 4.

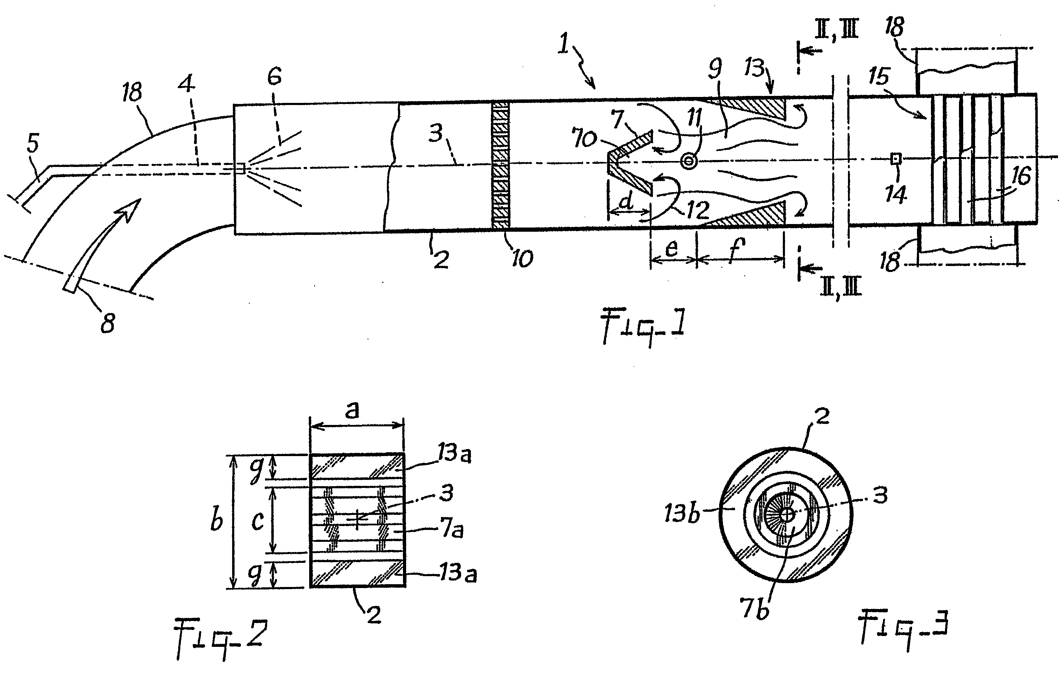

Le brûleur 1 représenté à la figure 1 comprend, dans un conduit 2 admettant un axe longitudinal 3, un injecteur 4 raccordé à une canalisation d'alimentation 5, qui émet un jet 6 de gaz combustible de même axe 3 que le conduit 2, en direction d'un stabilisateur de flamme 7. Le conduit 2 reçoit un flux d'air comburant 8, qui permet au gaz combustible injecté de brûler en créant une flamme 9 en aval du stabilisateur 7. L'air ensemencé de gaz combustible atteint le stabilisateur 7 à travers un dispositif 10 anti-retour de flamme, constitué par une plaquette perforée plane en céramique qui est disposée perpendiculairement à l'axe 3 et dont les trous sont suffisamment fins pour empêcher la flamme 9, allumée à l'aide d'une bougie 11 escamotable, de remonter en amont vers l'injecteur 4.

Le stabilisateur de flamme 7 est réalisé sous la forme d'un obstacle disposé à l'intérieur du conduit 2, transversalement à l'axe 3 de celui-ci, sur lequel il est centré. Cet obstacle présente une forme évasée dans le sens d'écoulement des gaz et offre du côté aval une cavité 70, de façon à créer un mouvement tourbillonnaire 12 propre à assurer l'accrochage de la flamme 9 sur le stabilisateur 7.

Du fait du niveau de température des gaz brûlés requis pour l'oxydation du monoxyde de carbone (T>1 000°C environ), la formation de cet oxyde n'est pas uniforme dans la section du conduit. Lorsque, à une certaine distance en aval du stabilisateur 7, la combustion est achevée avec en particulier l'oxydation du CO initialement formé, il n'en est pas de même le long de la paroi du conduit 2 dans la section transversale située à la même distance du stabilisateur. En effet, du fait de la propagation oblique de la flamme 9 à partir du stabilisateur, les réactions d'oxydation des gaz dans un même plan transversal n'ont pas le même degré d'avancement selon que l'on considère des gaz au voisinage de la partie centrale du conduit 2 correspondant au sillage du stabilisateur de flamme ou au voisinage de sa paroi.

Pour obtenir une combustion sensiblement complète du CO émanant de la région périphérique de la flamme 9, on réalise un brassage des gaz en disposant, en aval et à quelque distance du stabilisateur 7, un obstacle 13 qui crée une diminution de la section du conduit 2 tendant à renvoyer les gaz proches de la paroi vers l'axe 3 dudit conduit.

L'obstruction par l'obstacle 13 d' une partie périphérique de la section du conduit (50 à 60% par exemple) prend fin brusquement, du côté aval, ce qui crée des remous assurant un brassage intense du flux gazeux issu de la flamme de combustion. Ce brassage réchauffe les gaz dont l'oxydation n'est pas achevée et permet la poursuite de la combustion du CO. Corrélativement, les gaz brûlés se trouvent momentanément refroidis, ce qui y freine considérablement la formation du NOx thermique. Ces deux effets concourent à l'obtention d'un faible degré de pollution.

Afin d'éviter l'apparition de vibrations, la forme donnée à l'obstacle 13 est telle que la réduction de section qu'il crée dans le sens de l'écoulement ne soit pas brusque, mais progressive. Il offre à cet effet une surface interne oblique qui se rapproche en pente douce de l'axe 3.

La structure du stabilisateur 7 et de l'obstacle 13 dépend de la forme de la section droite du conduit 2. Par exemple, dans le cas d'une section de forme rectangulaire (figure 2), le stabilisateur est constitué par un obstacle 7a en forme de gouttière, offrant une section en V et s'étendant perpendiculairement à l'axe 3 du conduit 2, symétriquement par rapport à celui-ci et parallèlement à l'une des paires de côtés opposés du conduit (dans le présent exemple, il s'agit des petits côtés), le sommet du V étant tourné vers l'amont de l'écoulement dans ledit conduit. Quant à l'obstacle 13, il est alors constitué par deux demi-obstacles 13a disposés le long des parois du conduit 2, symétriquement par rapport à son axe 3, qui s'étendent parallèlement au stabilisateur 7.

La figure 3 est relative à une variante de réalisation suivant laquelle le conduit 2 a une section circulaire. Dans ce cas, le stabilisateur 7 prend la forme de la partie sommitale 7b d'un cône de révolution creux de même axe 3 que le conduit 2, tandis que l'obstacle 13 est constitué par une pièce annulaire 13b coaxiale, offrant une surface interne tronconique.

Comme le montrent les figures 2 et 3, les obstacles 13a ou 13b, situés dans la région où la flamme 9 atteint la paroi du conduit 2, occupent en presque totalité la partie de la section de ce dernier laissée libre par le stabilisateur 7. Ces obstacles peuvent être formés par des pièces pleines de section triangulaire (comme représenté), ou par de simples déflecteurs minces orientés obliquement vers l'axe 3 du conduit.

En aval de l'obstacle 13 est placé un capteur de température 14 mesurant la température créée par la flamme 9 et commandant une vanne de réglage du débit de combustible (non représentée) de façon à maintenir cette température égale à une valeur de consigne éventuellement variable. Une telle régulation permet en particulier d'ajuster de façon optimale la richesse du mélange durant la phase d'allumage du brûleur.

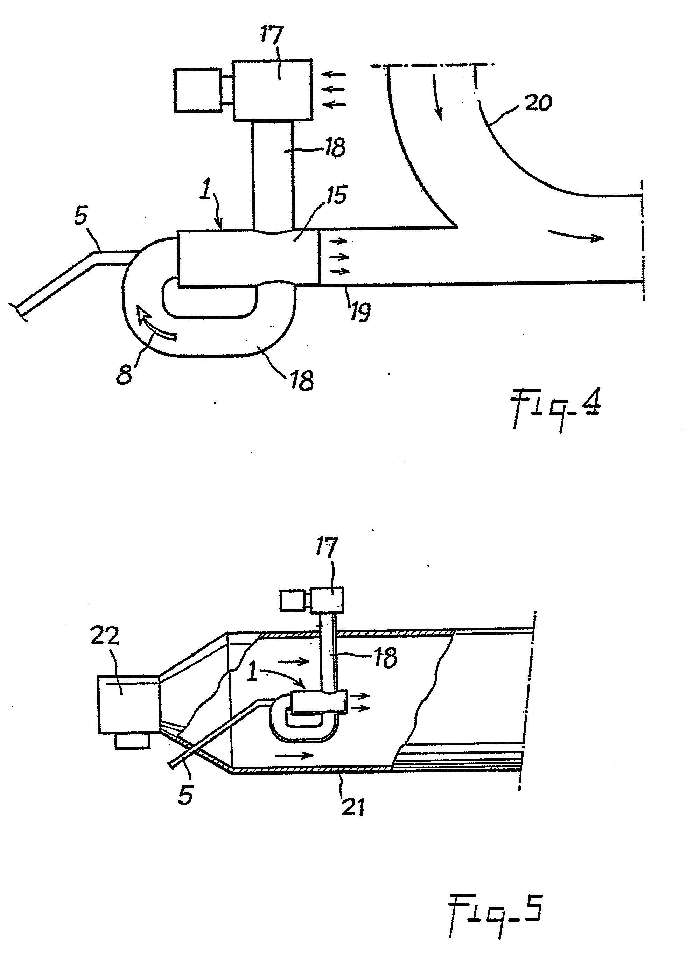

Le flux d'air comburant 8 peut avantageusement être préalablement échauffé par passage à travers un échangeur de chaleur 15, prévu dans le conduit 2 en aval de l'obstacle 13 (figures 1 et 4). Cet échangeur, à travers lequel s'écoule le flux gazeux chaud issu de la flamme 9, se compose par exemple d'un faisceau de tubes 16 traversant le conduit 2 et parcourus par l'air comburant issu d'un ventilateur 17 et acheminé par une conduite 18 vers l'entrée du brûleur 1. Cet air se trouve ainsi échauffé par les gaz de combustion. Afin de mieux contrôler la température, les parois au contact de l'écoulement gazeux sont réalisées en matériau réfractaire isolant.

Le préchauffage de l'air de combustion permet de faire fonctionner le brûleur avec un mélange relativement pauvre de façon à réduire le taux d'oxydes d'azote NOx dans les gaz brûlés. En effet, on peut alors choisir une richesse de valeur faible, comprise par exemple entre 0,30 et 0,35 avec toutefois obtention d'une flamme 9 stable dans le sillage du stabilisateur 7. Dans ces conditions, où la température reste inférieure à 1 500°C, la formation de NOx reste modérée.

La distance à laquelle est placé l'échangeur 15 en aval de la flamme 9 doit être telle que la transformation de CO en $CO_2$ soit suffisamment avancée au niveau de l'échangeur, mais sans risque d'une importante formation supplémentaire de NOx et de déperditions latérales de chaleur exagérées. Cette distance résulte d'un compromis entre les émissions de NOx et de CO tolérées pour l'utilisation particulière considérée.

Dans un exemple de réalisation particulier d'un brûleur 1 fonctionnant au propane, avec réchauffage de l'air comburant, et comportant un conduit 2 de section rectangulaire a x b = 93 x 130 mm, le dispositif de sécurité anti-retour de flamme 10 est constitué par une plaquette en céramique percée de 3 500 trous de 1 mm; le stabilisateur de flamme 7 est constitué par une gouttière de hauteur c = 63 mm et de longueur d = 45 mm. A une distance e = 45mm en aval du stabilisateur sont disposés deux demi-obstacles 13a de section longitudinale triangulaire, de longueur f = 90 mm et de hauteur g = 25 mm. Le stabilisateur et les obstacles sont réalisés en fibre réfractaire. Les essais montrent qu'il est nécessaire de disposer l'échangeur à une distance d'environ 1 mètre des demi-obstacles 13a pour obtenir une combustion complète.

Pour une richesse du mélange air-propane égale à 0,32, la puissance du brûleur étant d'environ 44 kW, les températures qui apparaissent le long du conduit sont les suivantes :
320°C environ en amont du point d'injection du combustible (température de l'air réchauffé par l'échangeur 15);
1 090°C environ entre l'obstacle 13 et l'échangeur 15;
850°C environ à la sortie de l'échangeur 15, où les gaz chauds issus du brûleur sont disponibles pour une quelconque application.

On relève dans les gaz brûlés à 1 060 mm en aval du stabilisateur 7 un taux de CO inférieur à 5 ppm environ et un taux de NOx d'environ 0,8 ppm, ce qui correspond à environ 4 mg de NOx produit par kWh. Tout en étant du même ordre de grandeur, les résultats obtenus avec le méthane sont encore meilleurs.

Il est à noter que la configuration du brûleur permet, sans préchauffage de l'air, d'obtenir des émissions de NOx qui, bien que 4 à 5 fois supérieures, peuvent être acceptables pour certaines applications.

Par ailleurs, lors d'essais au biométhane (méthane 55% - dioxyde de carbone 45%), ce brûleur produit 2 mg de NOx par kWh pour une puissance de 16 kW, la production de CO restant très faible.

Enfin, des mesures effectuées avec combustion complète d'un mélange méthane (10%) - azote (90%) (simulation de combustibles à bas pouvoir calorifique d'environ 3 MJ/m³) révèlent un taux de NOx de 10 mg/kWh pour une puissance de 11 kW.

Un brûleur 1, avec ou sans réchauffage d'air, peut constituer à lui seul un générateur de chaleur à faible pollution, pouvant fournir des gaz 19 à température relativement élevée compatible avec les conditions de fonctionnement. Pour des applications à température plus modérée, il est possible de réchauffer l'écoulement gazeux d'une conduite 20 par mélange avec les gaz chauds issus du générateur comme indiqué sur la figure 4. On peut enfin intégrer ce générateur à l'intérieur d'une gaine pour obtenir un brûleur à veine d'air. Ainsi la figure 5 montre une gaine 21 délimitant une veine d'air alimentée par un ventilateur 22 et contenant un tel brûleur 1. Celui-ci est alimenté en gaz combustible par la canalisation 5 et en air par la conduite 18 à l'aide du ventilateur auxiliaire 17. Cette dernière utilisation est intéressante dans le cas où il est important de minimiser les déperditions de chaleur avec l'extérieur.

**Revendications**

1. Brûleur à faible émission de gaz polluants, comprenant, dans un conduit linéaire, un injecteur de fluide combustible qui crée dans le conduit, alimenté en air comburant, un mélange combustible/air qui brûle en donnant naissance à une flamme, laquelle s'accroche à un stabilisateur de flamme disposé dans le conduit en aval de l'injecteur, et constitué par une pièce obturant une partie centrale de la section droite du conduit (2), cette pièce, réalisée en matériau réfractaire, étant destinée à créer une zone de recirculation, caractérisé par le fait qu'en aval de ce stabilisateur (7) est placé, sur la face interne de la paroi du conduit (2), un obstacle (13) causant une réduction locale suivie d'une augmentation brusque de la section du conduit, cet obstacle étant réalisé en matériau réfractaire isolant, comme la paroi du conduit (2).

2. Brûleur selon la revendication 1, caractérisé par le fait que la pièce constituant le stabilisateur (7) offre une conformation creuse avec une section droite en V, et est disposée de façon à aller en s'évasant dans le sens de l'écoulement du mélange gazeux.

3. Brûleur selon la revendication 1 ou 2, caractérisé par le fait que l'obstacle (13), considéré suivant la direction de l'axe (3) du conduit (2), est situé en regard de la portion de section droite de conduit laissée libre par le stabilisateur (7).

4. Brûleur selon l'une quelconque des revendications 1 à 3, caractérisé par le fait que l'obstacle (13) couvre une fraction seulement de la portion de section droite de conduit (2) laissée libre par le stabilisateur (7).

5. Brûleur selon l'une quelconque des revendications 1 à 4, caractérisé par le fait que l'obstacle (13) est conformé de façon à créer une diminution progressive de la section du conduit (2).

6. Brûleur selon l'une quelconque des revendications 2 à 5, caractérisé par le fait que la section du conduit (2) a un contour de forme rectangulaire et que le stabilisateur (7) est constitué par une gouttière (7a) s'étendant transversalement parallèlement à l'une des paires de côtés opposés du contour du conduit (2), l'obstacle (13) étant composé de deux demi-obstacles (13a) s'étendant parallèlement à ladite gouttière et disposés symétriquement par rapport à l'axe (3) du conduit.

7. Brûleur selon l'une quelconque des revendications 2 à 5, caractérisé par le fait que la section du conduit (2) a un contour de forme circulaire et que le stabilisateur (7) est constitué par une pièce conique de révolution (7b) disposée coaxialement au conduit (2), l'obstacle (13) étant formé par une couronne (13b) également coaxiale au conduit.

8. Brûleur selon l'une quelconque des revendications 1 à 7, caractérisé par le fait qu'entre l'injecteur (4) et le stabilisateur (7) est placée transversalement dans le conduit (2) une plaque perforée (10) couvrant toute la section de celui-ci.

9. Brûleur selon l'une quelconque des revendications 1 à 8, caractérisé par le fait qu'à la sortie du conduit (2) est disposé un échangeur de chaleur (15) destiné à assurer l'échauffement préalable de l'air comburant introduit à l'entrée du conduit (2).

10. Brûleur selon la revendication 9, caractérisé par le fait que l'échangeur de chaleur (15) est situé à une distance suffisante de l'obstacle (13) pour permettre la combustion complète dans l'intervalle correspondant de l'oxyde de carbone issu de la flamme (9).

11. Brûleur selon l'une quelconque des revendications 1 à 10, caractérisé par le fait qu'il est pourvu d'un dispositif de régulation déterminant le débit du fluide combustible injecté en fonction de la température désirée dans le conduit (2) en aval de la flamme (9).

## Patentansprüche

1. Brenner mit niedriger Schadstoffemission im Abgas, der in einer geradlinigen Leitung einen Brennstoffinjektor aufweist, der in der Leitung, gespeist von die Verbrennung bewirkender Luft, eine Mischung Brennstoff/Luft erzeugt, die unter Erzeugung einer Flamme brennt, die sich an einen Flammenstabilisator anhängt, der in der Leitung unterhalb des Injektors angeordnet und durch einen Teil gebildet ist, das einen Zentralbereich des Querschnitts der Leitung (2) verschließt, wobei das aus feuerfestem Material bestehende Teil dazu bestimmt ist eine Rezirkulationszone zu erzeugen, dadurch gekennzeichnet, daß unterhalb des Stabilisators (7) auf der Innenseite der Seitenwand der Leitung (2) ein Hindernis (13) angeordnet ist, das eine örtliche Verringerung gefolgt von einer plötzlichen Vergrößerung des Leitungsquerschnitts verursacht, wobei das Hindernis aus dämmendem feuerfestem Material gebildet ist, wie die Seitenwand der Leitung (2).

2. Brenner nach Anspruch 1, dadurch gekennzeichnet , daß das den Stabilisator (7) bildende Teil eine hohle Formgebung bietet mit einem V-förmigen Querschnitt und derart angeordnet ist, um sich fortschreitend in Richtung des Gasgemischstroms auszubauchen.

3. Brenner nach Anspruch 1 oder 2, dadurch gekennzeichnet, daß das Hindernis (13), betrachtet gemäß der Richtung der Achse (3) der Leitung (2), gegenüber des Bereichs des Querschnitts der Leitung angeordnet ist, der von dem Stabilisator (7) freigelassen wird.

4. Brenner nach einem der Ansprüche 1 bis 3, dadurch gekennzeichnet, daß das Hindernis (13) nur einen Bruchteil des Querschnitts der Leitung (2) bedeckt, der von dem Stabilisator (7) freigelassen wird.

5. Brenner nach einem der Ansprüche 1 bis 4, dadurch gekennzeichnet, daß das Hindernis (13) derart ausgebildet ist, um eine zunehmende Verringerung des Querschnitts der Leitung (2) zu erzeugen.

6. Brenner nach einem der Ansprüche 2 bis 5, dadurch gekennzeichnet, daß der Querschnitt der Leitung (2) eine rechteckförmige Kontur aufweist, und daß der Stabilisator (7) von einer Rinne (7a) gebildet ist, die sich quer, parallel zu einem der Paare der gegenüberliegenden Seiten der Kontur der Leitung (2), erstrecken, wobei das Hindernis (13) aus zwei Halbhindernissen (13a) gebildet ist, die sich parallel zur Rinne erstrecken und symmetrisch bezüglich der Achse (3) der Leitung angeordnet sind.

7. Brenner nach einem der Ansprüche 2 bis 5, dadurch gekennzeichnet, daß der Querschnitt der Leitung (2) eine kreisförmige Kontur aufweist, und daß der Stabilisator (7) aus einem konischen Drehstück (7b) gebildet ist, das koaxial zu der Leitung (2) angeordnet ist, wobei das Hindernis (13) aus einem Kranz (13b) gebildet ist, der ebenfalls koaxial zur Leitung verläuft.

8. Brenner nach einem der Ansprüche 1 bis 7, dadurch gekennzeichnet, daß zwischen dem Injektor (4) und dem Stabilisator (7) in der Leitung (2) querverlaufend eine perforierte Platte (10) angeordnet ist, die deren gesamten Querschnitt überdeckt.

9. Brenner nach einem der Ansprüche 1 bis 8, dadurch gekennzeichnet, daß am Ausgang der Leitung (2) ein Wärmetauscher (15) angeordnet ist, zur Sicherstellung der Vorheizung der die Verbrennung bewirkenden Luft, die am Eingang der Leitung (2) eingeführt wird.

10. Brenner nach Anspruch 9, dadurch gekennzeichnet, daß der Wärmetauscher (15) mit einem ausreichenden Abstand von dem Hindernis (13) angeordnet ist, um die vollständige Verbrennung in dem entsprechenden Intervall des Kohlendioxids, das von der Flamme ausgestoßen wird, zu erlauben.

11. Brenner nach einem der Ansprüche 1 bis 10, dadurch gekennzeichnet, daß er mit einer Einstellvorrichtung versehen ist, die die Brennstoffeinspritzrate in Abhängigkeit der in der Leitung (2) unterhalb der Flamme (9) gewünschten Temperatur bestimmt.

## Claims

1. Burner with low emission of polluting gases comprising, within a straight conduit, an injector (14) of combustible fluid that creates, in said conduit, supplied with combustion supporting air, a fuel/air mixture which in burning creates a flame (9) which clings to a flame stabilizer (7) located inside said conduit and downstream of said injector, said stabilizer being formed by an element obturating a central portion of the cross-section of said conduit (2), said element, which is made of refractory material, serving to create a recirculation zone, characterized in that downsteam of said stabilizer (7) is located, on the inner face of the conduit (2) wall, an obstacle (13) causing a local reduction, followed by an abrupt increase in the conduit's cross-section, said obstacle being formed of refractory insulating material, like the conduit (2) wall.

2. Burner according to claim 1, characterized in that said element forming said stabilizer (7) is a hollow solid with a V-cross-section, and is arranged so as to splay in the direction of the flow of the gaseous mixture.

3. Burner according to claim 1 or 2, characterized in that said obstacle (13), viewed in the direction of the conduit (2) axis (3), is located opposite the portion of the conduit's cross-section left free by the stabilizer (7).

4. Burner according to any one of claims 1 to 3, characterized in that said obstacle (13) covers a fraction only of the portion of the conduit's cross-section left free by the stabilizer (7).

5. Burner according to any one of claims 1 to 4, characterized in that said obstacle (13) is shaped so as to create a gradual reduction of the conduit's cross-section.

6. Burner according to any one of claims 2 to 5, characterized in that the conduit's (2) cross-section has a rectangular contour and that the stabilizer (7) is formed of a trough extending transversely, parallel to one of the pairs of opposite sides of the conduit's (2) contour, said obstacle (13) being formed of two semi-obstacles (13a) extending parallel to said trough and arranged symmetrically with respect to the conduit's (2) axis (3).

7. Burner according to any one of claims 2 to 5, characterized in that conduit's (2) cross-section has a circular contour and that the stabilizer (7) is formed of a rotational conical element (7b) located coaxially to the conduit (2), said obstacle being formed of a ring (13b) likewise coaxial to said conduit.

8. Burner according to any one of claims 1 to 7, characterized in that between the injector (4) and the stabilizer (7) is placed, transversely in said coduit (2), a perforated plate (10) covering the entire cross-section of said conduit (2).

9. Burner according to any one of claims 1 to 8, characterized in that, at the outlet of the conduit (2) is located a heat exchanger (15) provided to ensure pre-heating of the combustion-supporting air introduced at said conduit's (2) inlet.

10. Burner according to claim 9, characterized in that said heat exchanger (15) is located at a sufficient distance from said obstacle (13) to allow complete combustion in the corresponding space of carbon monoxide coming from the flame (9).

11. Burner according to any one of claims 1 to 10, characterized in that it is provided with a regulation device for controlling the flowrate of fluid fuel injected as a function of desired temperature in said conduit (2) downstream of the flame (9).

Fig-1

Fig-2

Fig-3

EP 0 242 249 B1

Fig-4

Fig-5